(19) Europäisches Patentamt
European Patent Office
Office européen des brevets

(11) **EP 2 100 913 A1**

(12) **EUROPEAN PATENT APPLICATION**
published in accordance with Art. 153(4) EPC

(43) Date of publication:
**16.09.2009 Bulletin 2009/38**

(51) Int Cl.:
**C08J 7/04** *(2006.01)*  **D06M 23/00** *(2006.01)*

(21) Application number: **07832525.5**

(22) Date of filing: **27.11.2007**

(86) International application number:
**PCT/JP2007/072800**

(87) International publication number:
**WO 2008/069041 (12.06.2008 Gazette 2008/24)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **01.12.2006 JP 2006325764**

(71) Applicant: **Teijin Fibers Limited**
**Osaka-shi, Osaka 541-0054 (JP)**

(72) Inventors:
• **SUZUOKA, Akihiro**
**Chiyoda-ku**
**Tokyo 100-0011 (JP)**

• **KITTAKA, Kimio**
**Chiyoda-ku**
**Tokyo 100-0011 (JP)**
• **SAITO, Toshinori**
**Akishima-shi**
**Tokyo 196-0022 (JP)**

(74) Representative: **Hallybone, Huw George et al**
**Carpmaels & Ransford**
**43-45 Bloomsbury Square**
**London WC1A 2RA (GB)**

(54) **METHOD OF IMPARTING FUNCTION TO MOLDED POLYMER AND APPARATUS THEREFOR**

(57) There are provided a method for imparting a high-durability function to a polymer formed article, which can efficiently impart various function-imparting agents to the polymer formed article, can decrease processing waste liquid as much as possible and recover the waste liquid and the function-imparting agents, can also reuse them as needed, and moreover, can impart the function-imparting agents to the polymer formed article by a continuous system, not by a batch system; and an apparatus thereof.

A method for imparting a function to a polymer formed article, which comprises spraying a supercritical fluid to the polymer formed article to firmly fix a function-imparting agent to the polymer formed article.

[Fig. 1]

EP 2 100 913 A1

**Description**

[Technical Field]

The present invention relates to a method for imparting a function to a polymer formed article such as a textile structure and an apparatus thereof, and more particularly, to a method for imparting a function-imparting agent to a polymer formed article by using a supercritical fluid and an apparatus thereof.

[Background Art]

Previously, a method of allowing a water dispersion of a function-imparting agent or an aqueous function-imparting agent to be absorbed concurrently with dyeing or a method of performing padding (dipping → nipping → drying → curing) using a binder has been solely used as a method of adhering the function-imparting agent to a polymer formed article such as a textile structure.

However, from consideration to the global environment (air pollution, waste water pollution, effective use of resources and the like), it has recently come to be required to highly clarify waste liquid containing various function-imparting agents in the above-mentioned processing, and it has been desired to decrease chemical cost and equipment cost required for the clarification.

For example, as a method for decreasing the cost of waste liquid treatment in dyeing processing, patent document 1 (JP-A-4-245981) discloses a method of utilizing a supercritical fluid in dying of a textile structure, thereby allowing waste liquid to approximate to zero, avoiding the use of a dyeing aid which has hitherto been used in large amounts, and further, being able to recover a dye not absorbed by textile (an undyed dye).

However, in the above-mentioned method, the dyeing is performed in an autoclave, so that circulation of a processing solution (dye liquor) does not occur. Accordingly, when this method is intended to be applied to adhering processing of the function-imparting agent as it is, there has been the problem that adhesion unevenness of the agent occurs to cause a decrease in expression efficiency of the function (the degree of expression of the function to the pickup of the agent) or in durability thereof, or to cause hardening in the texture of a textile reaction vessel.

Patent document 2 (JP-A-2002-212884) proposes a method for providing a method for imparting a high-durability function to a textile structure, which solves this problem, can efficiently impart various function-imparting agents to a polymer formed article, can decrease processing waste liquid as much as possible and recover the waste liquid and the function-imparting agents, and can also reuse them as needed. According to this patent document 2, when a function-imparting agent is adhered to a polymer formed article in a supercritical fluid, the function-imparting agent is adhered while circulating the supercritical fluid. However, also in this method, the textile structure is treated in a pressure vessel, and the fact remains that it is a batch system. There is therefore the problem of inefficiency.

[Patent Document 1] JP-A-4-245981
[Patent Document 2] JP-A-2002-212884

[Disclosure of the Invention]

[Problems That the Invention Is to Solve]

An object of the present invention is to provide a method for imparting a high-durability function to a polymer formed article, which can efficiently impart various functionimparting agents to the polymer formed article, can decrease processing waste liquid as much as possible and recover the waste liquid and the function-imparting agents, can also reuse them as needed, and moreover, can impart the function-imparting agents to the polymer formed article by a continuous system, not by a batch system; and an apparatus thereof.

[Means for Solving the Problems]

The present invention relates to a method for imparting a function to a polymer formed article, which is characterized in that a supercritical fluid is sprayed to the polymer formed article to firmly fix a function-imparting agent to the polymer formed article.
Here, in the method for imparting a function to a polymer formed article in the present invention, it is preferred that the function-imparting agent is previously mixed with the supercritical fluid, and that the mixing is performed in a mixing coil.
Further, the spraying of the mixed fluid to the polymer formed article is preferably performed by a method of using a reactor having an approximately reverse T-shaped space taken in a cross section, allowing the polymer formed article to run through one space portion passing through from one of the approximately reverse T-shape of this reactor to the other, and spraying the mixed fluid toward the polymer formed article from the other space portion existing between from an upper end portion of an approximately center portion to a lower end portion.
In the present invention, preferred is a method of further mixing the mixed fluid in an additional mixing coil provided in the vicinity of an upper side of the reactor and performing heating by a heater provided in the vicinity of the additional mixing coil.
Further, in the present invention, a method of providing a heater in the vicinity of a bottom of the reactor and heating the reactor thereby is also preferred.
Furthermore, in the present invention, a method of providing an infrared ray lamp in the vicinity of a bottom of the reactor and heating the reactor thereby is also preferred.

On the other hand, in the method for imparting a function to a polymer formed article of the present invention, a single nozzle type jet nozzle may be used, the supercritical fluid and the function-imparting agent may be previously mixed with each other and supplied to a supply port of the jet nozzle, and this mixed fluid may be sprayed from a tip of the nozzle to the polymer formed article.

In this case, it is preferred that the mixed fluid of the supercritical fluid and the function-imparting agent is heated in the vicinity of the supply port on the upstream side of the single nozzle type jet nozzle.

Further, the polymer formed article may be laser heated, and successively, the above-mentioned mixed fluid may be sprayed from the single nozzle type jet nozzle to the heated site.

Furthermore, in the method for imparting a function to a polymer formed article of the present invention, a double nozzle type jet nozzle may be used, the supercritical fluid and the function-imparting agent may be each supplied to separate supply ports of the jet nozzle without previously mixing both and mixed at a tip of the nozzle, and this mixed fluid may be sprayed to the polymer formed article.

In this case, it is preferred that the supercritical fluid and the function-imparting agent are each separately heated in the vicinity of the supply port on the upstream side of the double nozzle type jet nozzle.

Further, the polymer formed article may be laser heated, and successively, the above-mentioned mixed fluid may be sprayed from the double nozzle type jet nozzle to the heated site.

Then, the present invention relates to an apparatus for imparting a function to a polymer formed article, in which a fluid storage container for storing a fluid which can be converted to a supercritical state, a fluid pump for compressing and transporting the fluid, a function-imparting agent pump for transporting a function-imparting agent and a function-imparting agent storage container are sequentially connected through connecting pipes, a mixing pipe is branched from the connecting pipe between the fluid pump and the function-imparting agent pump, a reactor having an approximately reverse T-shaped space taken in a cross section facing to a tip direction of the mixing pipe is disposed, the approximately reverse T-shaped space comprising one space portion for allowing a polymer formed article to run therethrough which passes through from one of the approximately reverse T-shape of this reactor to the other and the other space portion for spraying the function-imparting agent existing between from an upper end portion of an approximately center portion to a lower end portion, further, a nozzle mounted on a tip portion of the mixing pipe is connected to the upper end portion of the other space portion of the reactor, and furthermore, a mixing coil is connected to a path of the mixing pipe.

In the apparatus of the present invention as used herein, preferred embodiments include an apparatus in which another mixing coil is further connected to between the mixing pipe between the mixing coil and the reactor, and a heater is provided together in the vicinity of the other mixing coil.

Further, in the apparatus of the present invention, preferred embodiments also include an apparatus in which a heater is provided together in the vicinity of a bottom portion of the reactor.

Furthermore, in the apparatus of the present invention, preferred embodiments also include an apparatus in which an infrared ray lamp is provided together in the vicinity of a bottom of the reactor.

[Advantages of the Invention]

According to the present invention, there can be provided a method for imparting a high-durability function to a polymer formed article, which can efficiently impart various function imparting agents to the polymer formed article, can decrease processing waste liquid as much as possible and recover the waste liquid and the function-imparting agents, can also reuse them as needed, and moreover, can impart the function-imparting agents to the polymer formed article by a continuous system, not by a batch system; and an apparatus thereof.

[Brief Description of the Drawings]

[Fig. 1] Fig. 1 is a schematic view showing one example of a function-imparting apparatus of the present invention.

[Fig. 2] Fig. 2 is a schematic view showing another example of a function-imparting apparatus of the present invention.

[Fig. 3] Fig. 3 is a schematic view showing still another example of a function-imparting apparatus of the present invention.

[Fig. 4] Fig. 4 is a cross-sectional block diagram of a single nozzle type jet nozzle used in the present invention.

[Fig. 5] Fig. 5 is a cross-sectional block diagram of a double nozzle type jet nozzle used in the present invention.

[Fig. 6] Fig. 6 is a block diagram for illustrating a laser-heating assist cluster jet method of the present invention.

[Fig. 7] Fig. 7 is a perspective view of Fig. 6.

[Description of Reference Numerals and Signs]

L1: Pipe
L2: Pipe
L3: Mixing Pipe
L3p: Nozzle
P1: Fluid Pump

P2: Function-Imparting Material Pump
R1, R2, R3: Reactor
h1, h2: Space Portions
11: Gas Cylinder
12: Reaction Solution Container
13: Mixing Coil

[Best Mode for Carrying Out the Invention]

The supercritical fluid used in the present invention is a fluid at a temperature exceeding the critical temperature and under a pressure exceeding the critical pressure, and is defined as a noncondensable high-density fluid. This state is a state which can not be said to belong to either a gas phase or a liquid phase, and the supercritical fluid has a diffusive performance equivalent to that of gas, although it has a density equivalent to that of liquid.

That is to say, the supercritical fluid largely changes in density by a slight change in pressure, and has a low viscosity and a high diffusibility. It is therefore possible to dissolve various function-imparting agents. In particular, it well dissolves a function-imparting agent having no polarity. Accordingly, it can allow these function-imparting agents to penetrate into details of a polymer formed article, and can be said to be a liquid suitable for function-imparting processing.

The above-mentioned supercritical fluid includes a fluid in the form of gas or liquid in a high-pressure state sufficiently higher than the pressure of an apparatus used in usual textile processing (a subcritical fluid). The fluid in such a high-pressure state can dissolve various function-imparting agents just like the supercritical fluid, and easily penetrates into details of the polymer formed article. Accordingly, this fluid exhibits a function similar to the supercritical fluid.

Specific examples of the above-mentioned supercritical fluids (including subcritical fluids which are fluids in the form of gas or liquid in a high-pressure state) include carbon dioxide, N2O (Japanese Name: nitrous oxide), water, ethanol and the like. However, carbon dioxide is most preferably used in consideration of easiness of conditions for conversion to a supercritical fluid state, safety, heat resistance, pressure resistance and corrosion resistance of equipment, and the like. The critical temperature of carbon dioxide is 31.1°C, and the critical pressure is 7.2 Mpa.

In the present invention, the supercritical carbon dioxide fluid is more specifically described. There is shown a carbon dioxide fluid under supercritical conditions of 31.1°C, the critical temperature of carbon dioxide, or more and 7.48 MPa, the critical pressure thereof, or more. Further, it is also one preferred embodiment in the present invention to use a subcritical carbon dioxide fluid, a carbon dioxide fluid under subcritical conditions, namely conditions near the critical points. In the present invention, the subcritical carbon dioxide fluid indicates a carbon dioxide fluid having a pressure of 7.0 MPa or more and a temperature of 25°C or more and being not in a supercritical state.

The supercritical carbon dioxide fluid (including the subcritical carbon dioxide fluid) used in the present invention is low in both the critical temperature and critical pressure, inexpensive next to water, innocuous, flame-retardant and noncorrosive, and small in environmental load. The specific gravity can be appropriately varied by changing the pressure and temperature, so that the difference in density from water, an organic solvent or a mixed solution of the function-imparting agent can be easily secured. Further, an operation for removing the supercritical carbon dioxide fluid (subcritical carbon dioxide fluid), an extracting agent, from the function-imparting agent extracted to a supercritical carbon dioxide fluid (subcritical carbon dioxide fluid) phase is also easy. Furthermore, carbon dioxide is a weak acid, and if the function-imparting agent is a weak base, the supercritical carbon dioxide fluid (subcritical carbon dioxide fluid) is used as an extracting agent suitable for extracting the predetermined function-imparting agent from an aqueous solution or an organic solvent solution by an acid-base interaction between the supercritical carbon dioxide fluid (subcritical carbon dioxide fluid) and the function-imparting agent.

Then, the polymer formed article used in the present invention means a formed article to which the function-imparting agent can be adhered, such as a textile structure such as yarn, woven fabric, knitted fabric or nonwoven fabric, a film or a resin sheet mainly composed of a polyester-based polymer, a polypropylene-based polymer, an acetate-based polymer, a polyvinyl chloride-based polymer or an aramid-based polymer. It may be a mixture thereof. In particular, in such uses that the article is repeatedly washed for use, one mainly composed of polyester fiber is preferably exemplified.

As the above-mentioned polyester fiber, preferred is one having ethylene terephthalate as a main repeating component, more preferred is one in which 90 mol% or more of repeating units are ethylene terephthalate, and still more preferred is one in which 95 mol% or more of repeating units are ethylene terephthalate.

In the above-mentioned polyester, a small amount of a copolymerizable component may be copolymerized. Specifically, there are exemplified aromatic dicarboxylic acids such as isophthalic acid, 5-sodium sulfoisophthalic acid and naphthalenedicarboxylic acid, aliphatic dicarboxylic acids such as adipic acid and sebacic acid, aliphatic diols such as tetramethylene glycol and hexamethylene glycol, and the like. Further, the above-mentioned polyester fiber may be one to which a stabilizer, an antioxidant, an antistatic agent, a fluorescent whitening agent, a catalyst, a colorant or the like is added within the range not impairing the object of this range.

In the present invention, the supercritical fluid is sprayed to the polymer formed article to adhere the function-imparting agent to the polymer formed article.

Preferably, the function-imparting agent is previously mixed with the supercritical fluid, and this mixed fluid is sprayed to the polymer formed article to firmly fix the functionimparting agent to the polymer formed article, thereby improving durability of the function.

As such a function-imparting agent, there can be used a function-imparting agent having low or no polarity, and the function-imparting agent is preferably a compound soluble in the supercritical fluid. Specifically, preferred examples thereof include function-imparting agents shown below. Further, in order to enhance processability, developability and reproducibility of the function, and the like, it is more preferred that the function-imparting agent has a higher solid concentration (purity).

The function-imparting agents for imparting high-durability water repellency include fluorine-based compounds, silicone-based resins, paraffin (wax) resins and the like.

The function-imparting agents for imparting high stain-proofing properties and/or high moisture absorption properties include polyalkylene glycols. Preferred examples of the polyalkylene glycols include polyethylene glycol having a molecular weight of 20,000 or less.

The function-imparting agents for imparting high water repellency and/or high oil repellency and/or a hand magnified in sliminess include dimethylpolysiloxanes (silicones), and the molecular weight of the dimethylpolysiloxanes (silicones) is preferably 10,000 or less.

Preferred examples of the function-imparting agents for imparting high flame retardant properties include condensation type halogenated phosphoric esters, condensation type phosphoric esters, halogenated phosphoric esters, phosphoric esters and hexabromcyclododecane.

Preferred examples of the function-imparting agents for imparting high water absorption properties and/or high sweat absorption properties and/or high moisture absorption properties and/or high stain-proofing properties and/or high antistatic properties include a polycondensation product of an polyalkylene glycol having a molecular weight of 1,000 to 3,000 and terephthalic acid, wherein the degree of polycondensation thereof is from 3 to 10.

The function-imparting agents for imparting high light resistance improving properties include ultraviolet absorbers, and particularly, preferred examples of the ultraviolet absorbers include benzotriazole derivatives or a benzophenone derivatives.

As a dye for dyeing the polymer formed article, a disperse dye is preferred. As such a disperse dye, there can be used a dye slightly soluble in water and used in dyeing of hydrophobic fiber from a system in which it is dispersed in water. There can be arbitrarily used benzeneazo (such as monoazo and disazo), heterocyclic azo (thiazoleazo, benzothiazoleazo, quinolineazo, pyridineazo, imidazoleazo and thiopheneazo), anthraquinone or condensation (quinophthaline, styrine and coumarin) dyes which are generally used in dyeing of polyester fiber, acetate fiber and the like. Further, the higher concentration of coloring solid matter in a dye preferably results in the easier dyeing.

Furthermore, the function-imparting agents for chemically plating to the polymer formed article include metal complexes.

Metals in the above-mentioned metal complexes include copper, silver, nickel, gold or the like. Further, as the metal complex, there is preferably used one which is high in solubility in the subcritical fluid or the supercritical fluid, inexpensive, and moreover, reducible at a low temperature having a little influence on the polymer formed article, such as 20 to 100°C. Specifically, it is preferred that metal complexes represented by $MnXm(COD)w$, $Mn(COD)m(COT)w$, $Mn(COD)m(OSiPh_3)w$, $Mn(COT)m(OSiPh_3)w$, $Mn(R)m(OSiPh_3)w$, $Mn(RX)m(OSiPh_3)w$, $M(OR)n$, $M(OCOR)n$ and $M(RCOCH_2COR)n$ are used. These metal complexes are easily reduced to metals with a reducing agent. In these metal complexes, X is F, Cl, Br, I, CN, $NO_3$ or $ClO_4$, and R is a hydrocarbon group, a halogenated carbon group such as fluorine or a phosphor-containing hydrocarbon group. Further, COD is cyclooctadiene, COT is cyclooctatriene, and $OSiPh_3$ is a silanol group. Furthermore, M is a plating metal (Cu, Ag, Ni, Au or the like), and n, m and w are an integer determined by the valence number of the metal. When M is divalent or more, X and R exist in a metal-containing compound in a plurality of forms. However, these forms maybe the same or different for each. In particular, it is desirable to use a metal complex in which COT or COD is contained as a ligand, one or two or more selected from the group consisting of siloxo group, an alkyl group and a silanol group are used as a ligand other than that, and these ligands are concurrently linked to a metal, because it is easily hydrocracked with hydrogen at a low temperature or room temperature having a little influence on the polymer formed article, thereby being able to obtain metal particles.

The reducing agent which reduces the metal complex carried on a surface of the polymer formed article is preferably one or two or more selected from the group consisting of hydrogen, carbon monoxide, hydrazine, a boron compound, a phosphite, a sulfite, Rochelle salt, diethylamineborane, formalin, hydroquinone, a saccharide and an organic acid. A reducing reaction with the reducing agent for the metal complex carried on the surface of the polymer formed article may be conducted in the subcritical fluid or supercritical fluid after defatting and etching of the polymer formed article, or in a gas phase after pressure reduction.

As described above, the subcritical fluid or supercritical fluid in which the metal complex containing the same metal as the plating metal is dissolved is sprayed to and brought into contact with the polymer formed article, whereby the surface of the polymer formed article is defatted and etched, and then, the metal complex is carried on the surface of the polymer formed article. Then, the metal complex carried on the surface of the polymer formed article is reduced using the reducing agent, thereby depositing the metal in the metal complex on a surface of a substrate to form metal nuclei. That is to say, the metal complex carried on the surface of the polymer formed article is reduced with the reducing agent such as hydrogen to easily eliminate the ligand in the metal complex from the metal, thereby depositing this metal on a surface of a substrate to form metal nuclei.

Further, an electroless plating method further comprises the step of immersing the polymer formed article on the surface of which the metal nuclei are formed, in a plating solution containing the above-mentioned plating metal, in addition to the above-mentioned pretreatment step. As the metal in the plating solution, the same metal as the metal in the above-mentioned metal complex is used. Further, the reducing reaction with the reducing agent for the metal complex carried on the surface of the polymer formed article may be conducted in the plating solution to which the reducing agent is added, not in the subcritical fluid or supercritical fluid after defatting and etching of the polymer formed article, or not in the gas phase after pressure reduction.

As described above, by immersing the polymer formed article on the surface of which the metal nuclei are deposited, in the plating solution of the plating metal, a deposition reaction is allowed to continuously proceed using the deposited metal as an autocatalyst, as it is, to form a plated layer. That is to say, the metal in the plating solution is deposited on the metal nuclei by autocatalysis to form a plated layer. As a result, the adhesiveness between the metal nuclei and the plated layer can be improved, so that the plated layer can be made difficult to peel off from the surface of the polymer formed article.

When the above function-imparting agent is not liquid, it is preferred that the function-imparting agent is dissolved in a solvent to use as a reaction solution.

Such solvents include polar solvents such as methanol, ethanol, propanol, isopropyl alcohol, butanol, benzyl alcohol, acetone, acetophenone, N-methyl-2-pyrrolidone, methyl ethyl ketone, dimethyl sulfoxide, dimethylformamide, ethylene glycol and acetonitrile, aromatic solvents such as toluene, benzene and xylene, and the like.

The concentration of the function-imparting agent in the above-mentioned reaction solution is usually from 1 to 60% by weight, and preferably from about 5 to 40% by weight.

Further, the concentration of the function-imparting agent in the supercritical fluid (including the subcritical fluid) may be appropriately adjusted depending on the properties and the like of the function-imparting agent used.

Further, although the amount of the function-imparting agent adhered to the polymer formed article varies depending on the kind of function-imparting agent, it is usually from 1 to 50%% by weight in terms of solid content. When the amount adhered is less than 1% by weight, the exhibition of the function is not satisfactory in some cases.

In the present invention, the supercritical fluid is sprayed to the above polymer formed article to firmly fix the function-imparting agent to the polymer formed article, thereby imparting the specific function to the polymer formed article.

As a firmly fixing procedure, there may be used a method of treating the surface of the polymer formed article with the above-mentioned various function-imparting agents such as the dye, the metal complex and the flame retardant, and spraying the supercritical fluid to this treated polymer formed article to firmly fix the function-imparting agents to the polymer formed article.

Further, in a firmly fixing procedure in the present invention, the function-imparting agent is previously mixed in the supercritical fluid, and then, this mixed fluid is sprayed to the polymer formed article such as the textile structure, thereby firmly fixing the function-imparting agent to the polymer formed article to impart the specific function. Preferred is the latter method.

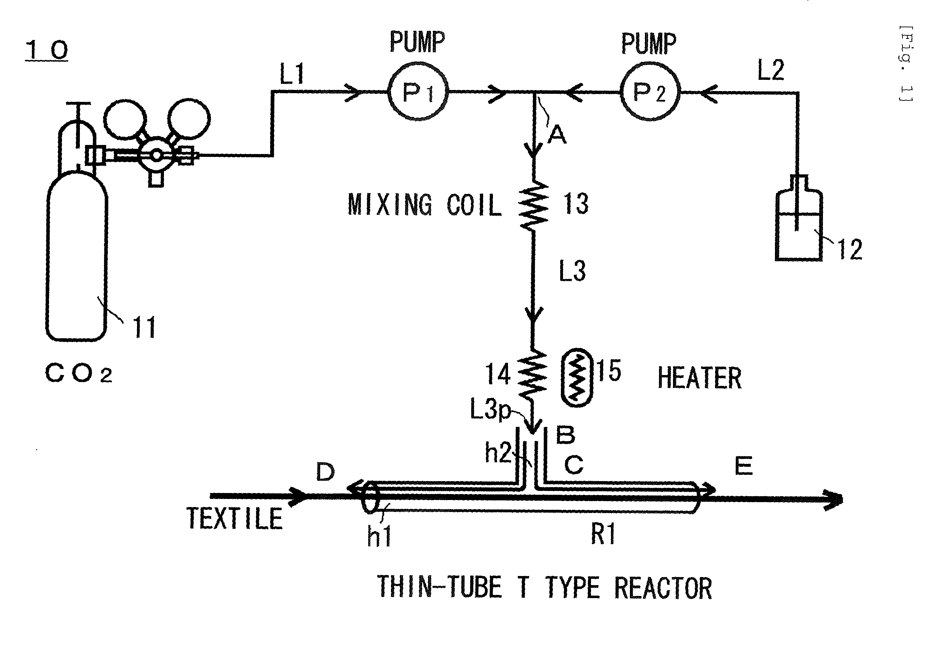

The function-imparting method of the present invention and the apparatus used in this function-imparting method will be described below using the drawings. In a function-imparting apparatus 10 of Fig. 1, a fluid storage container 11 ($CO_2$ gas cylinder) for storing a fluid which can be converted to a supercritical state, a fluid pump P1 for compressing and transporting the fluid, a function-imparting agent pump P2 for transporting a function-imparting agent and a reaction solution container 12 (function-imparting agent storage container) are sequentially connected through connecting pipes L1 and L2. Then, a mixing pipe L3 is branched at a branch point A from the connecting pipe between the fluid pump P1 and the function-imparting agent pump P2. A filter for removing dirt in carbon dioxide, rust of the gas cylinder and other foreign matter and a high-pressure container cooler for storing carbon dioxide may be sequentially disposed between the pump P1 and the branch point A. Further, the reaction solution container 12 may be a mere solvent container. In this case, an apparatus for injecting imparting agent such as a syringe is additionally provided between the pump P2 and the point A. Furthermore, there is disposed a circular reactor R1 having an approximately reverse T-shaped space taken in a cross section facing to a tip direction of the mixing pipe L3, and comprising one space portion h1 for allowing a polymer formed article such as textile to run therethrough, which passes through from one D of this reactor to the other E and the other space portion h2 for spraying the function-imparting agent existing between from an upper end portion B of an approximately center portion to a lower end portion C, and a nozzle L3p on a tip portion of the above-mentioned mixing pipe L3 is connected to the upper end portion B of the other space portion of the reactor. Further, a mixing coil 13 is connected to a path of the above-mentioned mixing pipe L3. Here, that a nozzle L3p is connected to the upper end portion B of the reactor also includes the case where a nozzle L3p is inserted in the upper end portion B and the case where both are integrally connected to each other.

In the function-imparting apparatus 10, carbon dioxide supplied from the carbon dioxide gas cylinder 11 is elevated in pressure and temperature to a supercritical state (or a subcritical state) by the pump P1 through the pile L1, and reaches the mixing pipe L3 at the blanch point A. On the other hand, a reaction solution (function-imparting agent solution) of the reaction solution container 12 passes through the pipe L2 and the pump P2, and reaches the mixing pipe L3 at the branch point A to be mixed with carbon dioxide in the supercritical state. In this case, supercritical fluid carbon dioxide and the reaction solution are homogeneously mixed with each other in the mixing coil 13 connected to the mixing pipe L3.

Here, the mixing coil 13 performs mixing and extraction of the function-imparting agent into the supercritical fluid by allowing the fluid to flow in a coil-like flow path. The mixed state in this coil is more facilitated by adjustment of flow rate, loading of a filler, installation of a baffle plate, and the like.

In the apparatus of Fig. 1, the mixed fluid is sprayed from the nozzle L3p of the mixing pipe to the polymer formed article such as textile running in the space portion h1 in the direction D to E of the thin-tube T type reactor R1 through the space portion h2 in the direction B to C, thereby imparting the function-imparting agent to the running polymer formed article such as textile.

In this case, the mixed fluid is sprayed from the nozzle L3p, whereby there is a fear of a rapid decrease in pressure and temperature in the mixing pipe L3. In Fig. 1, therefore, a mixing coil 14 is additionally provided in a passage of the mixing pipe L3 in the vicinity of B of the reactor R1, and a heater 15 is provided in the vicinity of this mixing coil 14 to maintain the supercritical or subcritical state in the path way of the mixing pipe L3.

Although the reactor R1 has an approximately reverse T-shaped space taken in a cross section, and is constituted by a hollow pipe made of aluminum, stainless steal or the like, the dimensions thereof are not particularly limited.

As for the above respective pipes and devices, the insides thereof are ground, thereby decreasing the fluid resistance to keep a smooth flow. Further, the nozzle diameter of the above-mentioned nozzle L3p is, for example, from 1 to 500 μm, and preferably from about 10 to 200 μm.

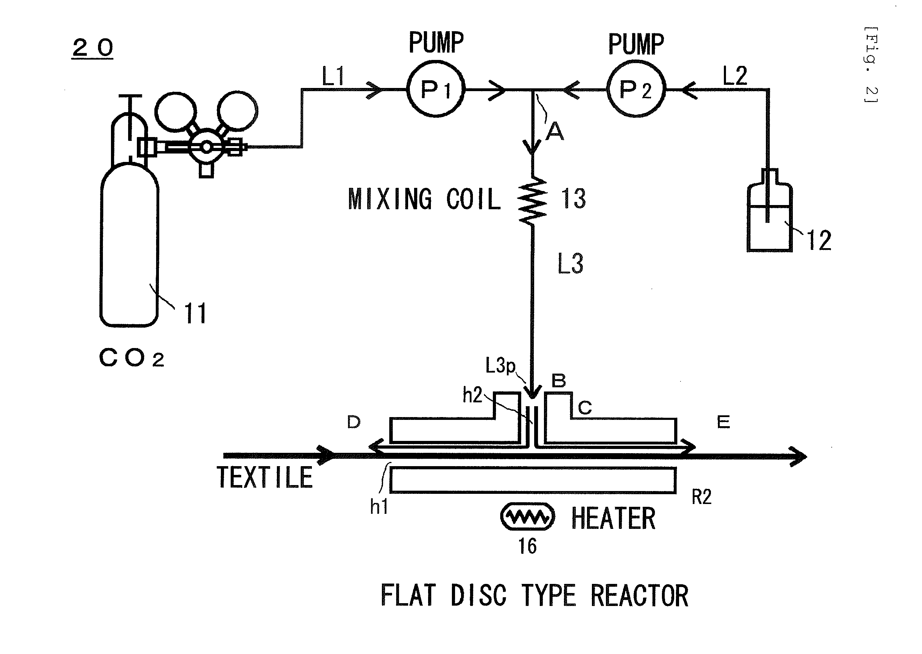

A function-imparting apparatus 20 of Fig. 2 has the same constitution as in Fig. 1 with the exception that a flat disc type reactor is used as a reactor R2, and that a heater 16 is provided together in the vicinity of a bottom portion of the reactor, in place of the mixing coil 14 and the heater 15 of Fig. 1.

According to the function-imparting apparatus 20 of Fig. 2, there is a fear of failing to sufficiently maintain a sprayed mixed fluid in the supercritical state or the subcritical state on spraying. Accordingly, a running polymer formed article itself such as textile is heated with the heater 16 provided in a bottom portion of the reactor R2, thereby preventing the effect of imparting the function-imparting agent from decreasing.

Although the reactor R2 has a reverse T-shaped space taken in a cross section, and is constituted by an approximately disc-like (takenfromthefront) pipemadeofaluminum, stainless steal or the like, the dimensions thereof are not particularly limited.

The other constitutions and functions are the same as in Fig. 1, so that the descriptions thereof are omitted.

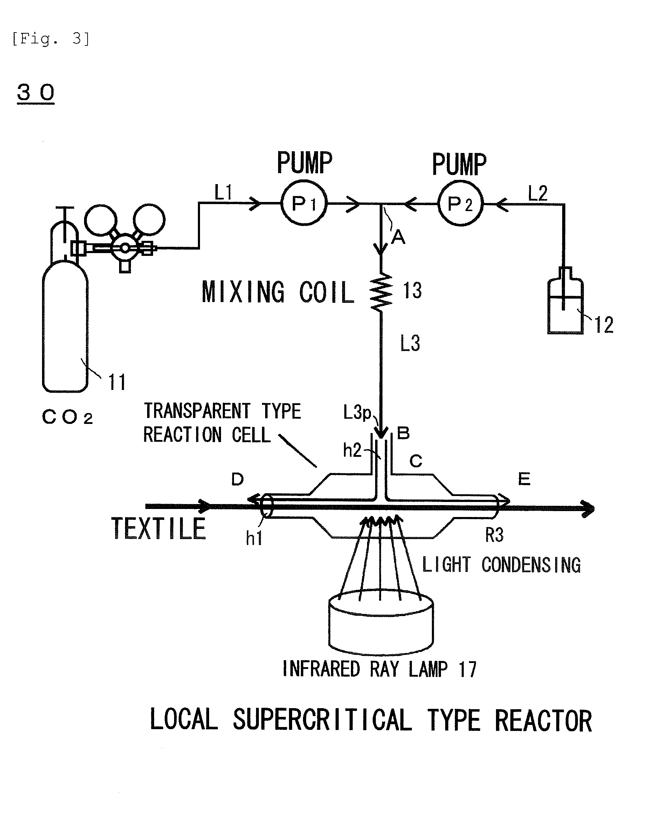

A function-imparting apparatus 30 of Fig. 3 has the same constitution as in Fig. 1 with the exception that a transparent type reaction cell R3 is used as a reactor R3, and that an infrared ray lamp 17 is provided together in the vicinity of a bottom portion of the reactor, in place of the mixing coil 14 and the heater 15 of Fig. 1.

According to the function-imparting apparatus 30 of Fig. 3, there is a fear of failing to sufficiently maintain a sprayed mixed fluid in the supercritical state or the subcritical state on spraying. Accordingly, a running polymer formed article itself such as textile is heated with the infrared ray lamp 17 provided in a bottom portion of the reactor R3, and the mixed fluid is heated in the vicinity of the nozzle L3p on the tip portion of the mixing pipe, thereby maintaining the supercritical or subcritical state of the mixed fluid.

Although the reactor R3 has a reverse T-shaped space taken in a cross section, and is constituted by a hollow pipe made of quartz or the like, which is shaped so that a center portion thereof in the direction D to E is inflated, the dimensions thereof are not particularly limited.

The other constitutions and functions are the same as in Fig. 1, so that the descriptions thereof are omitted.

In the above description of Figs. 1 to 3, there has been explained the example in which the supercritical fluid is sprayed to the running polymer formed article to firmly fix the function-imparting agent to the surface of the polymer formed article. However, the polymer formed article such as the textile structure or the film may be fixed, and the supercritical fluid may be sprayed to the polymer formed article while moving the nozzle L3p back and forth and/or from right to left.

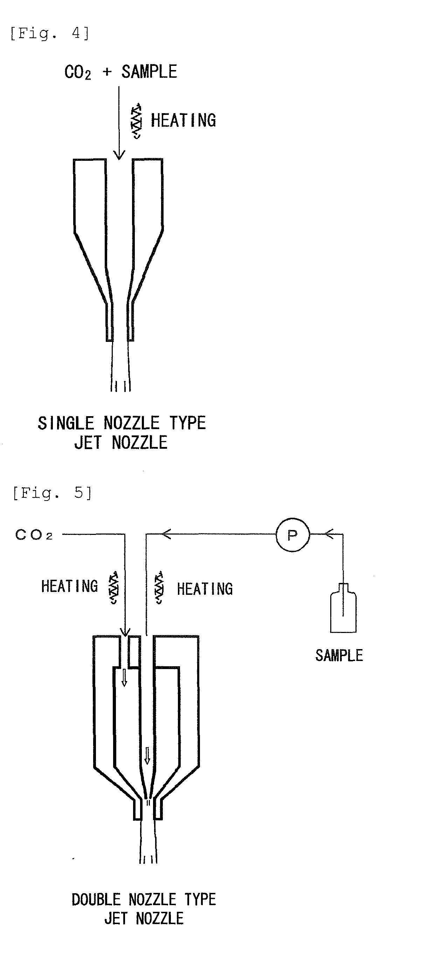

Further, in the method for imparting a function to a polymer formed article of the present invention, a single nozzle type jet nozzle may be used, the supercritical fluid ($CO_2$) and the function-imparting agent (sample) may be previously mixed with each other and supplied to a supply port of the jet nozzle, and this mixed fluid may be sprayed from a tip of the nozzle to the polymer formed article, as shown in Fig. 4.

In this case, it is preferred that the mixed fluid of the supercritical fluid and the function-imparting agent (sample) is heated in the vicinity of the supply port on the upstream side of the single nozzle type jet nozzle.

When the single nozzle type jet nozzle is used, the supercritical fluid ($CO_2$) and the function-imparting agent (sample) are mixed with each other before they enter the nozzle. It is therefore necessary that the sample is soluble in the supercritical fluid such as $CO_2$. Further, the supercritical fluid such as $CO_2$ is hydrophobic, so that the function-imparting agent (sample) is also required to be hydrophobic. Furthermore, $CO_2$ and th sample are heated at the same time, so that a heat decomposable sample can not be used.

In the method for imparting a function to a polymer formed article of the present invention using the single nozzle type jet nozzle of Fig. 3, the other constitutions and functions are the same as in Fig. 1, so that the descriptions thereof are omitted.

For example, the arrangement and piping paths of the supercritical fluid ($CO_2$) and the function-imparting agent (sample), the arrangement of the mixing coil, and the like are the same as in Fig. 1.

Further, in the method for imparting a function to a polymer formed article of the present invention, a double nozzle type jet nozzle may be used, the supercritical fluid ($CO_2$) and the function-imparting agent (sample) may be each supplied to a separate supply port of the jet nozzle without previously mixing both and mixed at a tip of the nozzle, and this mixed fluid may be sprayed to the polymer formed article, as shown in Fig. 5.

In this case, it is preferred that the supercritical fluid ($CO_2$) and the function-imparting agent (sample) are each separately heated in the vicinity of the supply port on the upstream side of the double nozzle type jet nozzle.

When the double nozzle type jet nozzle is used, the supercritical fluid ($CO_2$) and the function-imparting agent (sample) are mixed with each other in the nozzle. Accordingly, the function-imparting agent (sample) may not be soluble in the supercritical fluid ($CO_2$). Further, the functionimparting agent (sample) may be either hydrophobic or polar. Furthermore, the supercritical fluid ($CO_2$) and the function-imparting agent (sample) are independently heated, so that a heat decomposable sample is also applicable.

In the method for imparting a function to a polymer formed article of the present invention using the double nozzle type jet nozzle of Fig. 5, the other constitutions and functions are the same as in Fig. 1, so that the descriptions thereof are omitted.

For example, the arrangement and piping paths of the supercritical fluid ($CO_2$) and the function-imparting agent (sample) are the same as in Fig. 1 with the exception that the pipe L1 does not unite with the pipe L2 at the branch point A, and that the mixing coil 13 is not used, in Fig. 1.

In a jet nozzle specification such as the above single nozzle type jet nozzle or double nozzle type jet nozzle, (A) the jet orifice diameter and jet orifice length and (B) the kind of function-imparting agent [the kind of metal nanocolloid particles (gold, silver, copper or the like), conductivityexpressing material such as sodium citrate or aurichloric acid, adhesive material such as decanedithiol or triazinethiol, complex, alcohol or metal] are changed, thereby being useful for (C) uses such as (1) the field of electric and electronic uses [the microfabrication of RFID (wireless tags), organic transistors, IC wafers and the like, and the dust-free cutting of thin films and glass], (2) the field of transport equipment (ultralight conductive members for automobiles and aircraft, and the like), (3) textile (high-function fiber, conductive fiber, special dyeing technology and the like), (4) surface printing technology and (5) adhesive materials.

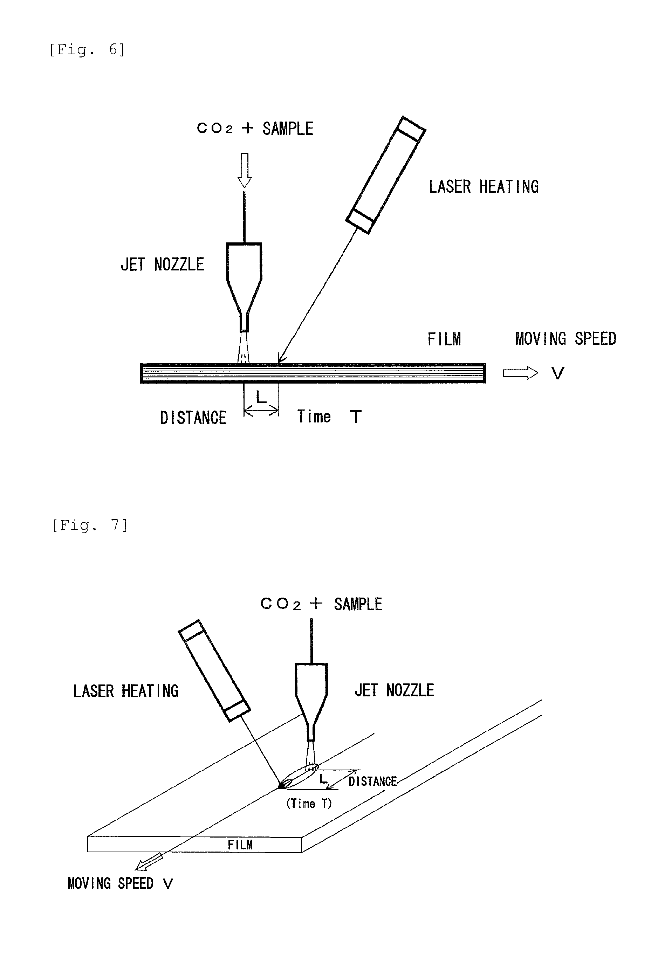

On the other hand, in the method for imparting a function to a polymer formed article of the present invention using the above single nozzle type jet nozzle or double nozzle type jet nozzle, the polymer formed articlemaybe previously laser heated, and successively, the mixed fluid of the supercritical fluid and the function-imparting agent may be sprayed from the single nozzle type jet nozzle or double nozzle type jet nozzle to the heated site, as shown in Figs. 6 and 7 (this method is hereinafter also referred to as a "laser-heating assist cluster jet method". The jet nozzle shown in Figs. 6 and 7 is the single nozzle type jet nozzle or double nozzle type jet nozzle, and it is shown that this method is applicable to either of them.

In this case, the film is laser heated, while moving the polymer formed article such as the film in one direction at a constant moving speed V, and successively, the mixed fluid of the supercritical fluid and the function-imparting agent is sprayed from the jet nozzle to the heated site, after T seconds from laser irradiation, at a position L mm apart from the heated site.

Thus, the laser heating makes it possible to decrease the heating width, and adjustment of the heating depth is also easy.

Further, when the function-imparting agent is driven in the surface of the heated site by the mixed fluid using the jet nozzle after the laser heating of the surface of the polymer formed article such as the film, as described above, diffusion of a heated portion is inhibited by cooling. Like this, the jet nozzle performs cooling of the heated portion by the laser heating, as well as it drives the function-imparting agent (sample) in the surface of the polymer formed article.

In the above method in which the laser heating and the jet nozzle are combined with each other (the laser-heating assist cluster jet method), the function-imparting agent (sample) can be driven in the heated portion for a short period of time after the laser heating.

According to this method, the height, depth and width of the surface of the polymer formed article after processing can be optimized by the distance between the nozzle and the surface of the formed article, the moving speed of the formed article, the kind of function-imparting agent and the amount thereof added, the surface temperature of the formed article, and the like, as well as the kind of laser and the diameter and length of the jet nozzle.

This method is applicable for users similar to those for the above jet nozzle specification by making these conditions aptitudinal.

The laser light output in the above laser heating is from 1 to 50 W, and preferably from about 1 to 30 W.

[Examples]

The present invention will be illustrated in more detail with reference to the following examples. Physical properties in the examples were measured by the following methods.

(1) As for adhesion of the function-imparting agent to the polymer formed article and the presence or absence of adhesion of the various function-imparting agents to the polymer formed article, qualitative analysis was performed by any one of the following methods.

(i) Line analysis (XMA) was performed using a scanning electron microscope manufactured by Rigaku Corporation.
(ii) After the function-imparting agent was extracted from the polymer formed article, qualitative analysis was performed with a fluorescent X-ray analyzer manufactured by Rigaku Corporation.
(iii) After the function-imparting agent was dissolved with hexafluoroisopropanol, qualitative analysis was performed by NMR.
(iv) After the function-imparting agent was dissolved (extracted) with hexafluoroisopropanol, qualitative analysis was performed by NMR.

(2) For evaluation of dyeability, the apparent color density K/S was determined by the Kubelka-Munk equation shown below from there flectance (R) at a maximum absorption wavelength of the dyed polymer formed article, using Macbeth COLOR-EYE Model CE-3100. Then, the value of K/S in the case when the same polymer formed article was dyed in a usual aqueous system was measured, and dyeability was evaluated by the ratio (percentage) of the value of K/S of the above-mentioned polymer formed article to that value.
When this ratio is 85% or more, the formed article can be judged to be dyeable approximately equivalently to the case when dyed in the usual aqueous system.

$$K/S = (1-R)^2 / 2R$$

(3) Flame Proofness (Flame Retardant Properties)

The LOI (limiting oxygen index) was measured based on JIS K 7201. When LOI≥27, the formed article can be judged to have high flame retardant properties.

Example 1

A drawn multifilament yarn of 83 dtex/24 filaments obtained by melt spinning polyethylene terephthalate containing 0.05% by weight of titanium oxide and having an intrinsic viscosity (measured in o-chlorophenol at 35°C) of 0.65 dl/g was scoured with 1 g/l Scorerol #400 (manufactured by Kao Corporation) at 70°C for 20 minutes. After washing with water and drying, a mixed fluid was sprayed from the nozzle L3p of the tip portion of the mixing pipe L3 while allowing the yarn to run in the space portion h1 in the direction D to E of the thin-tube T type reactor of the apparatus shown in Fig. 1 at 200 m/minute. That is to say, a gas was sent out of the carbon dioxide gas cylinder 11 to the mixing pipe L3 through the pipe L1 by the pump P1. On the other hand, an aqueous dispersion of a water repellency function-imparting agent, dimethylsiloxane having a molecular weight of 10,000, having a concentration of 10% in the reaction solution container 12 was sent out through the pipe L2 by the pump P2, and allowed to flow together with the carbon dioxide fluid at the branch point A. After well mixed in the mixing coil 13, the mixed fluid was further mixed in the mixing coil 14 and heated with the heater 15.
This mixed fluid was sprayed from the nozzle L3p of the mixing pipe L3 having a nozzle size of 10 μm to the above-mentioned running yarn.
In the apparatus 10 of Fig. 1, for the reactor R1, the space portion h1 in the direction D to E has a diameter of 2 mm and a length of 60 mm, and the space portion h2 between B and C has a diameter of 2 mm and a length of 15 mm. Then, the resulting yarn was thoroughly washed with water and dried.
It was confirmed by XMA that dimethylsiloxane was adhered to the resulting yarn. Further, this yarn had water repellency.

Example 2

Treatment and evaluation were performed in the same manner as in Example 1 with the exception that the function-imparting agent was replaced by polyethylene glycol having a molecular weight of 10,000.
It was confirmed by NMR that polyethylene glycol was adhered to the resulting yarn. Further, this yarn had water absorption properties.

Example 3

Treatment and evaluation were performed in the same manner as in Example 1 with the exception that the function-imparting agent was replaced by hexabromocyclododecane.
It was confirmed by XMA that hexabromocyclododecane was adhered to the resulting yarn. Further, this yarn had a LOI of 27 or more.

Example 4

Treatment and evaluation were performed in the same manner as in Example 1 with the exception that the function-imparting agent was replaced by an ultraviolet absorber (benzotriazole derivative.
It was confirmed by XMA that the benzotriazole derivative was adhered to the resulting yarn. Further, this yarn had absorption performance in an ultraviolet region.

Example 5

Treatment and evaluation were performed in the same manner as in Example 1 with the exception that 6% by weight of a disperse dye, SM1P (manufactured by Ciba Specialty Chemicals Inc. : C.I. Disperse Blue 60), was added to the reaction solution, in addition to the function-imparting agent, to perform treatment concurrently with dyeing.
It was confirmed by XMA that dimethylsiloxane was adhered to the resulting yarn. Further, this yarn had water repellency, and the K/S value of 95% of the case when the same yarn was dyed in a usual aqueous system was obtained.

Example 6

Treatment and evaluation were performed in the same manner as in Example 2 with the exception that 6% by weight of a disperse dye, SM1P (manufactured by Ciba Specialty Chemicals Inc.: C.I. Disperse Blue 60), was added to the reaction solution, in addition to the function-imparting agent, to perform treatment concurrently with dyeing.
It was confirmed by NMR that polyethylene glycol was adhered to the resulting yarn. Further, this yarn had water absorption properties, and the K/S value of 98% of the case when the same yarn was dyed in a usual aqueous system was obtained.

Example 7

Treatment and evaluation were performed in the same manner as in Example 3 with the exception that 6% by weight of a disperse dye, SM1P (manufactured by Ciba Specialty Chemicals Inc. : C.I. Disperse Blue 60), was added to the reaction solution, in addition to the function-imparting agent, to perform treatment concurrently with dyeing.
It was confirmed by XMA that hexabromocyclododecane was adhered to the resulting yarn. Further, this yarn had a LOI of 27 or more, and the K/S value of 91% of the case when the same yarn was dyed in a usual aqueous system was obtained.

Example 8

Treatment and evaluation were performed in the same manner as in Example 4 with the exception that 6% by weight of a disperse dye, SM1P (manufactured by Ciba Specialty Chemicals Inc. : C.I. Disperse Blue 60), was added to the reaction solution, in addition to the function-imparting agent, to perform treatment concurrently with dyeing.
It was confirmed by XMA that the benzotriazole derivative was adhered to the resulting yarn. Further, this yarn had absorption performance in an ultraviolet region, and the K/S value of 89% of the case when the same yarn was dyed in a usual aqueous system was obtained.

Comparative Example 1

Treatment and evaluation were performed in the same manner as in Example 1 with the exception that no function-imparting agent was used.
No dimethylsiloxane was adhered to the resulting yarn at all, and this yarn exhibited no water repellency.

Comparative Example 2

Treatment and evaluation were performed in the same manner as in Example 1 with the exception that a minicolor dyeing machine manufactured by Texam Giken Co. , Ltd. was used in place of the apparatus of Fig. 1 to perform usual immersion exhaustion treatment (130°C×60 min) without injecting carbon dioxide gas.
Dimethylsiloxane was scarcely adhered to the resulting yarn, and water repellency was not exhibited for the most part.

Comparative Example 3

Treatment and evaluation were performed in the same manner as in Example 1 with the exception that an autoclave was used in place of the apparatus of Fig. 1 to perform treatment at 145°C x 60 min without circulating supercritical carbon dioxide.
Dimethylsiloxane was locally adhered to the resulting yarn, and some parts exhibited a hard hand or no water repellency.

Example 9

An experiment was conducted in the same manner as in Example 1 with the exception that the apparatus 20 of Fig. 2 was used in place of the apparatus of Fig. 1 in Example 1. The temperature of the heater 16 was set to 200°C.
As a result, it was confirmed by XMA that dimethylsiloxane was adhered to the resulting yarn. Further, this yarn had water repellency. In the apparatus 20 of Fig. 2, for the flat disc type reactor R2, the space portion h1 in the direction D to E (up-and-down direction) is 2 mm and has a depth of 2 mm and a length of 600 mm, and the space portion (right and left) h2 between B and C is 2 mm and has a depth of 2 mm and a length of 15 mm.

Example 10

An experiment was conducted in the same manner as in Example 1 with the exception that the apparatus 30 of Fig. 3 was used in place of the apparatus of Fig. 1 in Example 1.
As a result, it was confirmed by XMA that dimethylsiloxane was adhered to the resulting yarn. Further, this yarn had water repellency.
In the apparatus 30 of Fig. 3, for the reactor R3, the portion D and the portion E have a diameter of 2 mm, the center portion in the direction D to E has a diameter of 8 mm, the length from D to E is 60 mm, and the space portion h2 between B and C has a diameter of 2 mm and a length of 15 mm.

Example 11

An experiment was conducted in the same manner as in Example 1 with the exception that the function-imparting agent was replaced by palladium acetonate (a catalyst for plating). The yarn was externally changed in color from white to black, and it was confirmed that the catalyst was imparted to a surface thereof.
In plating to the resulting yarn, activation was performed at 303 K in a 0.72 N-HC1 aqueous solution for 5 minutes. Further, plating treatment was performed using 100 mL/L of "OPC500A" manufactured by Okuno Chemical Industries Co., Ltd. and 100 mL/L of "OPC500B" manufactured by Okuno Chemical Industries Co., Ltd. as first electroless copper plating reagents under plating conditions of 303 K for 30 minutes. Externally, a lustrous plating film (the thickness of a plating layer: 10 $\mu$m) having no blistering was formed on the yarn.

Example 12

An experiment was conducted in the same manner as in Example 11 with the exception that the apparatus 20 of Fig. 2 was used in place of the apparatus of Fig. 1 in Example 1. The temperature of the heater 16 was set to 200°C.
As a result, the yarn was externally changed in color from white to black, and it was confirmed that the catalyst was imparted to a surface thereof.
Plating treatment to the resulting yarn was performed in the same manner as in Example 11. As a result, a lustrous plating film (the thickness of a plating layer: 10$\mu$m) having no blistering was externally formed on the yarn. In the apparatus 20 of Fig. 2, for the flat disc type reactor R2, the space portion h1 in the direction D to E (up-and-down direction) is 2 mm and has a depth of 2 mm and a length of 600 mm, and the space portion (right and left) h2 between B and C is 2 mm and has a depth of 2 mm and a length of 15 mm.

Example 13

An experiment was conducted in the same manner as in Example 11 with the exception that the apparatus 30 of Fig. 3 was used in place of the apparatus of Fig. 1 in Example 1.

As a result, the yarn was externally changed in color from white to black, and it was confirmed that the catalyst was imparted to a surface thereof.
Plating treatment to the resulting yarn was performed in the same manner as in Example 11. As a result, a lustrous plating film (the thickness of a plating layer: 10 $\mu$m) having no blistering was externally formed on the yarn.
In the apparatus 30 of Fig. 3, for the reactor R3, the portion D and the portion E have a diameter of 2 mm, the center portion in the direction D to E has a diameter of 8 mm, the length from D to E is 60 mm, and the space portion h2 between B and C has a diameter of 2 mm and a length of 15 mm.

[Industrial Applicability]

According to the method for imparting a function to a polymer formed article of the present invention and the apparatus thereof, function-imparting treatment particularly excellent in durability becomes possible without using an apparatus such as an autoclave. Accordingly, the method and apparatus of the present invention are useful for uses such as the field of electric and electronic uses, the field of transport supply and the field of textile as described above.

**Claims**

1. A method for imparting a function to a polymer formed article, which comprises spraying a supercritical fluid to the polymer formed article to firmly fix a function-imparting agent to the polymer formed article.

2. The method for imparting a function to a polymer formed article according to claim 1, wherein the function-imparting agent is previously mixed with the supercritical fluid, and the mixing is performed in a mixing coil.

3. The method for imparting a function to a polymer formed article according to claim 2, wherein a reactor having an approximately reverse T-shaped space taken in a cross section is used, the polymer formed article is allowed to run through one space portion passing through from one of the approximately reverse T-shape of this reactor to the other, and the mixed fluid is sprayed toward the polymer formed article from the other space portion existing between from an upper end portion of an approximately center portion to a lower end portion.

4. The method for imparting a function to a polymer formed article according to claim 3, wherein the mixed fluid is further mixed in an additional mixing coil provided in the vicinity of an upper side of the reactor, and heating is performed by a heater provided in the vicinity of said additional mixing coil.

5. The method for imparting a function to a polymer formed article according to claim 3, wherein the reactor is heated with a heater provided in the vicinity of a bottom of the reactor.

6. The method for imparting a function to a polymer formed article according to claim 3, wherein the reactor is heated with an infrared ray lamp provided in the vicinity of a bottom of the reactor.

7. The method for imparting a function to a polymer formed article according to claim 1 or 2, wherein using a single nozzle type jet nozzle, the supercritical fluid and the function-imparting agent are previously mixed with each other and supplied to a supply port of said jet nozzle, and this mixed fluid is sprayed from a tip of said nozzle to the polymer formed article.

8. The method for imparting a function to a polymer formed article according to claim 7, wherein the mixed fluid of the supercritical fluid and the function-imparting agent is heated in the vicinity of the supply port on the upstream side of the single nozzle type jet nozzle.

9. The method for imparting a function to a polymer formed article according to claim 7 or 8, wherein the polymer formed article is laser heated, and successively, the mixed fluid is sprayed from the single nozzle type jet nozzle to said heated site.

10. The method for imparting a function to a polymer formed article according to claim 1, wherein using a double nozzle type jet nozzle, the supercritical fluid and the function-imparting agent are each supplied to separate supply ports of said jet nozzle without previously mixing both and mixed at a tip of said nozzle, and this mixed fluid is sprayed to the polymer formed article.

11. The method for imparting a function to a polymer formed article according to claim 10, wherein the supercritical fluid and the function-imparting agent are each separately heated in the vicinity of the supply port on the upstream side of the double nozzle type jet nozzle.

12. The method for imparting a function to a polymer formed article according to claim 10 or 11, wherein the polymer formed article is laser heated, and successively, the mixed fluid is sprayed from the double nozzle type jet nozzle to said heated site.

13. An apparatus for imparting a function to a polymer formed article, in which a fluid storage container for storing a fluid which can be converted to a supercritical state, a fluid pump for compressing and transporting said fluid, a function-imparting agent pump for transporting a function-imparting agent and a function-imparting agent storage container are sequentially connected through connecting pipes, a mixing pipe is branched from the connecting pipe between the fluid pump and the function-imparting agent pump, a reactor having an approximately reverse T-shaped space taken in a cross section facing to a tip direction of the mixing pipe is disposed, the approximately reverse T-shaped space comprising one space portion for allowing a polymer formed article to run therethrough which passes through from one of the approximately reverse T-shape of this reactor to the other and the other space portion for spraying the function-imparting agent existing between from an upper end portion of an approximately center portion to a lower end portion, further, a nozzle mounted on a tip portion of said mixing pipe is connected to the upper end portion of the other space portion of said reactor, and furthermore, a mixing coil is connected to a path of said mixing pipe.

14. The apparatus for imparting a function to a polymer formed article according to claim 13, wherein another mixing coil is further connected to between the mixing pipe between the mixing coil and the reactor, and a heater is provided together in the vicinity of said other mixing coil.

15. The apparatus for imparting a function to a polymer formed article according to claim 13, wherein a heater is provided together in the vicinity of a bottom portion of the reactor.

16. The apparatus for imparting a function to a polymer formed article according to claim 13, wherein an infrared ray lamp is provided together in the vicinity of a bottom of the reactor.

[Fig. 1]

THIN-TUBE T TYPE REACTOR

HEATER

MIXING COIL

PUMP P2

PUMP P1

L2

L1

L3

L3p

CO$_2$

TEXTILE

10

11

12

13

14

15

A

B

C

D

E

R1

h1

h2

FLAT DISC TYPE REACTOR

[Fig. 2]

EP 2 100 913 A1

[Fig. 3]

<u>3 0</u>

LOCAL SUPERCRITICAL TYPE REACTOR

[Fig. 4]

CO$_2$ + SAMPLE

HEATING

SINGLE NOZZLE TYPE
JET NOZZLE

[Fig. 5]

CO$_2$

P

HEATING          HEATING

SAMPLE

DOUBLE NOZZLE TYPE
JET NOZZLE

[Fig. 6]

CO₂ + SAMPLE

LASER HEATING

JET NOZZLE

FILM    MOVING SPEED

⟹ V

L

DISTANCE    Time  T

[Fig. 7]

CO₂ + SAMPLE

LASER HEATING    JET NOZZLE

L    DISTANCE

(Time T)

FILM

MOVING SPEED V

## INTERNATIONAL SEARCH REPORT

| International application No. |
|---|
| PCT/JP2007/072800 |

A.  CLASSIFICATION OF SUBJECT MATTER
*C08J7/04*(2006.01)i, *D06M23/00*(2006.01)i

According to International Patent Classification (IPC) or to both national classification and IPC

B.  FIELDS SEARCHED

Minimum documentation searched (classification system followed by classification symbols)
C08J7/04-06, D06M10/00-11/84, 16/00, 19/00-23/18, B05D1/00-7/26

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2-111477 A  (Union Carbide Corp.), | 1,2,7,8,10, 11 |
| A | 24 April, 1990 (24.04.90), Claims; examples | 3-6,9,12-16 |
| | & EP 350910 A        & AU 8938070 A | |
| | & US 5108799 A        & US 5203843 A | |
| | & DE 68915215 E | |
| | | |
| X | JP 3-504689 A  (Union Carbide Chemicals and Plastics Co., Inc.), | 1,2,7,8,10, 11 |
| A | 17 October, 1991 (17.10.91), Full text | 3-6,9,12-16 |
| | & WO 90/11139 A        & EP 388928 A | |
| | & AU 9052047 A        & CA 2012704 A | |
| | & US 5009367 A        & DE 69003421 E | |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 February, 2008 (27.02.08) | 11 March, 2008 (11.03.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2007/072800 |

C (Continuation).　DOCUMENTS CONSIDERED TO BE RELEVANT

| Category* | Citation of document, with indication, where appropriate, of the relevant passages | Relevant to claim No. |
| --- | --- | --- |
| X<br>A | JP 3-504690 A　(Union Carbide Chemicals and Plastics Co., Inc.),<br>17 October, 1991 (17.10.91),<br>Full text<br>& WO 90/11334 A　　　& EP 388915 A<br>& AU 9052049 A　　　& CA 2012706 A<br>& DE 69003711 E　　　& US 5374305 A<br>& US 5466490 A | 1,2,7,8,10,<br>11<br>3-6,9,12-16 |
| X<br>A | JP 2001-519237 A　(Union Carbide Chemicals and Plastics Technology Corp.),<br>23 October, 2001 (23.10.01),<br>Full text<br>& WO 99/19081 A1　　& AU 9897962 A<br>& EP 1023127 A1　　& NO 200001831 A<br>& CN 1281390 A　　　& MX 2000003408 A1<br>& BR 9814065 A　　　& US 6416624 B1 | 1,2,7,8,10,<br>11<br>3-6,9,12-16 |
| X<br>A | JP 1-258770 A　(Union Carbide Corp.),<br>16 October, 1989 (16.10.89),<br>Full text<br>& EP 321607 A　　　& AU 8783138 A<br>& US 5027742 A　　　& KR 9310197 B1<br>& CA 1271671 A | 1,2,7,8,10,<br>11<br>3-6,9,12-16 |
| A | JP 11-197494 A　(Kenji MISHIMA),<br>27 July, 1999 (27.07.99),<br>Full text<br>(Family: none) | 1-16 |
| A | JP 2000-220074 A　(Toray Industries, Inc.),<br>08 August, 2000 (08.08.00),<br>Full text<br>(Family: none) | 1-16 |
| A | JP 6-313268 A　(Kansai Research Institute, Inc.),<br>08 November, 1994 (08.11.94),<br>Full text<br>(Family: none) | 1-16 |

Form PCT/ISA/210 (continuation of second sheet) (April 2007)

## INTERNATIONAL SEARCH REPORT

International application No.

PCT/JP2007/072800

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
   See extra sheet.

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.

PCT/JP2007/072800

Continuation of Box No.III of continuation of first sheet(2)

(i) The subject matters of this international application are classified as shown below.
First invention: claims 1-6, those parts of claims 7-9 in which claim 2 is directly or indirectly cited, and claims 13-16
Second invention: those parts of claims 7-9 in which claim 2 is not cited
Third invention: claims 10-12

(ii) The subject matter of claim 1 is a known technique as apparent from the fact that it is shown in the following documents. The technical feature of claim 1 cannot hence be regarded as a "special technical feature" in the meaning of the second sentence of Rule 13.2 of the Regulations under the PCT.
Consequently, the "special technical features" of the first, second, and third inventions are different from one another. There is no technical relationship among these inventions which involves one or more, identical or corresponding special technical features. They are hence not considered to be so linked as to form a single general inventive concept.

Document 1: JP 2-111477 A (Union Carbide Corp.), 24 April, 1990, Claims, Examples, etc.
Document 2: JP 3-504689 A (Union Carbide Chemicals and Plastics Co., Inc.), 17 October, 1991, the whole document
Document 3: JP 3-504690 A (Union Carbide Chemicals and Plastics Co., Inc.), 17 October, 1991, the whole document
Document 4: JP 2001-519237 A (Union Carbide Chemicals & Plastics Technology Corp.), 23 October, 2001, the whole document
Document 5: JP 1-258770 A (Union Carbide Corp.), 16 October, 1989, the whole document

Form PCT/ISA/210 (extra sheet) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4245981 A

- JP 2002212884 A